Europäisches Patentamt

(19) **European Patent Office**

**Office européen des brevets**

(11) Veröffentlichungsnummer: **0 159 669**
**B1**

(12) **EUROPÄISCHE PATENTSCHRIFT**

(45) Veröffentlichungstag der Patentschrifft:
07.02.90

(51) Int. Cl. ⁵: **B 65 D 51/00**

(21) Anmeldenummer: **85104703.5**

(22) Anmeldetag: **18.04.85**

(54) Vorrichtung zum Einsetzen und Haltern eines Verschlusses auf einem festen Rumpf.

(30) Priorität: **27.04.84 FR 8406652**

(43) Veröffentlichungstag der Anmeldung:
**30.10.85 Patentblatt 85/44**

(45) Bekanntmachung des Hinweises auf die Patenterteilung:
**07.02.90 Patentblatt 90/06**

(84) Bennante Vertragsstaaten:
**DE FR GB IT**

(56) Entgegenhaltungen:
**DE-B-2 357 789**
**GB-A-2 026 452**
**US-A-1 476 566**
**US-A-3 580 414**

(73) Patentinhaber: **PAUL JOURNEE S.A.**
**39, Avenue Marceau**
**F-92400 Courbevole (FR)**

(72) Erfinder: **Filaine, Roger**
**Immeuble le Fossé Vert, Appt. 1739**
**F-27140 Gisors (FR)**
Erfinder: **Karabowicz, Jean**
**2, rue de Picardle**
**F-95100 Argenteuil (FR)**
Erfinder: **Percebois, Serge**
**23, Résidence Bellevue**
**F-60240 Chaumont-en-Vexin (FR)**

(74) Vertreter: **Patentanwaltsbüro Cohausz & Florack**
**Postfach 14 01 20 Schumannstrasse 97**
**D-4000 Düsseldorf 1 (DE)**

LIBERGRAF, STOCKHOLM 1990

2

## Beschreibung

Die Erfindung betrifft eine Vorrichtung zum Einsetzen und Haltern eines Verschlusses auf einem Stutzen eines Behälters, bestehend aus dem Verschluß und einem Ring, der an dem Stutzen befestigt ist, wobei der Verschluß aus einer Kapsel besteht, an die ein Klappdeckel angelenkt ist. Eine Vorrichtung dieser Art ist bekannt (US-A-3 580 414).

Die Druckschrift US-A-1 476 566 beschreibt eine Vorrichtung zum Einsetzen und Haltern eines Verschlusses auf einen Stutzen eines Behälters, bestehend aus einem am Stutzen befestigten, festen Ring und aus einem Verschluß, wobei der Verschluß aus einer Kapsel besteht, die drehbar auf dem festen Ring befestigt ist, wobei der Ring einen gezahnten Bereich aufweist, wobei der Verschluß ein Element mit Kerben gegenüber dem gezahnten Bereich des Rings umfaßt, wobei die Kerben mit dem gezahnten Bereich des gegenüberliegenden Rings in Eingriff gelangen können.

Nachteilig an dieser bekannten Vorrichtung ist, daß zum Öffnen des Verschlusses eine Drehbewegung um einen definierten Winkel erforderlich ist und daß der Verschluß nach dem Öffnungsvorgang leicht abhanden kommen kann. Zudem ist beim Schließen dieses bekannten Verschlusses in nachteiliger Weise die paßgerechte Zuführung des Verschlusses auf den Ring erforderlich.

Aufgabe der Erfindung ist es, ein winkliges Einsetzen und Haltern der Kapsel auf einem ringförmigen, festen Rumpf ohne Befestigung durch Schrauben, durch Verkleben oder jedes andere zusätzliche Mittel zu ermöglichen.

Zu diesem Zweck ist die erfindungsgemäße Vorrichtung dadurch gekennzeichnet, daß die Kapsel drehbar auf dem Ring befestigt ist und diese einen gezahnten Bereich aufweist, wobei die Kapsel mindestens eine elastische Klaue mit Kerben gegenüber dem gezahnten Bereich des Rings umfaßt und die genannte elastische Klaue mit einer mit dem Deckel fest verbundenen Nase so zusammenwirkt, daß sie von der genannten Nase beim Schließen des Deckels elastisch zurückgedrückt ist und daß ihre Kerben mit dem gezahnten Bereich des gegenüberliegenden Rings in Eingriff gelangen.

In vorteilhafter Weise ermöglicht die Drehung der Kapsel in Bezug auf den Rumpf das winklige Einsetzen des Verschlusses in Bezug auf diesen Rumpf, und das Schließen des Deckels gewährleistet das Haltern des Verschlusses dank des Zusammenwirkens der Kerben der elastischen Klaue mit dem gezahnten Bereich des elastischen Rumpfes. Vorzugsweise besteht die elastische Klaue aus einem einzigen Teil, das zusammen mit der Verschlußkapsel hergestellt ist.

In vorteilhafter Weise ist sowohl der Deckel mit der daran fest verbundenen Nase als auch die Kapsel des Verschlusses mit einer daran fest verbundenen elastischen Klaue aus einem Stück hergestellt.

Im folgenden wird eine bevorzugte Ausführungsform des Erfindungsgegenstandes anhand einer Zeichnung näher erläutert.
Es zeigen:

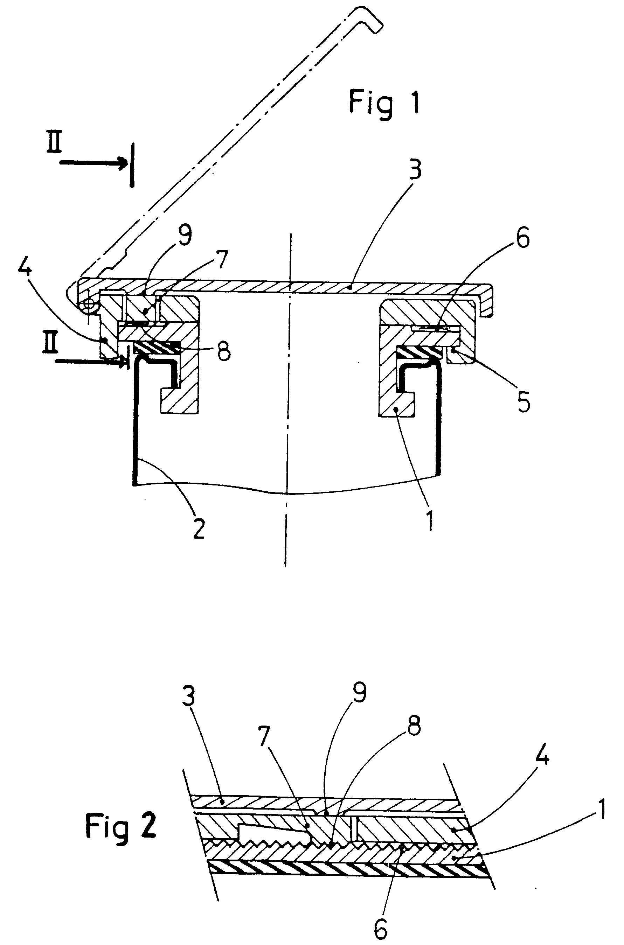

Fig. 1  einen auf einem Behälterstutzen befestigten Verschluß in schematischer Querschnittsansicht

Fig. 2  eine Teilansicht eines Details im Schnitt entlang der Linie II - II der Fig. 1

Der feste Rumpf besteht aus einem Paßring 1, der in bekannter Weise am Stutzen 2 eines Kraftfahrzeugbehälters befestigt ist. Ein Verschluß, bestehend aus einem an einer Kapsel 4 angelenkten Deckel 3, muß in Bezug auf den Ring 1 eingesetzt und dann festgesetzt werden.

Erfindungsgemäß ist die Kapsel 4 drehbar am Ring 1 befestigt und wid von Klauen 5 festgehalten. Der Ring 1 umfaßt an seiner Außenfläche einen gezahnten periphären Bereich 6, wogegen die Kapsel 4 eine elastisch verformbare Klaue 7 mit Kerben 8 gegenüber dem gezahnten Bereich 6 aufweist. In Ruhestellung greifen die Kerben 8 der Klaue 7 nicht in den gezahnten Bereich 6 ein. Zum Schließen des Deckels 3 (gezeigte Stellung) stützt sich eine mit dem Deckel fest verbundene Nase 9 auf die Fläche der Klaue 7 gegenüber den Kerben 8, die mit dem gezahnten Bereich 6 des Rings 1 in Eingriff gelangen und auf diese Weise den Verschluß 3, 4 festsetzen.

Die Klaue 7 wird vorteilhafterweise mit ihren Kerben zusammen mit der Kapsel 4, die aus thermoplastischem Kunststoff bestehen kann, aus einem Stück hergestellt. Die Nase 9 ist mit dem Deckel 3 ebenfalls einstückig gebildet.

## Patentansprüche

1. Vorrichtung zum Einsetzen und Haltern eines Verschlusses (3, 4) auf einem Stutzen (2) eines Behälters, bestehend aus dem Verschluß (3, 4) und einem Ring (1), der an dem Stutzen (2) befestigt ist, wobei der Verschluß (3, 4) aus einer Kapsel (4) besteht, an die ein Klappdeckel (3) angelenkt ist, *dadurch gekennzeichnet*, daß die Kapsel (4) drehbar auf dem Ring (1) befestigt ist und diese einen gezahnten Bereich (6) aufweist, wobei die Kapsel (4) mindestens eine elastische Klaue (7) mit Kerben (8) gegenüber dem gezahnten Bereich (6) des Rings (1) umfaßt und die genannte elastische Klaue (7) mit einer mit dem Deckel (3) fest verbundenen Nase (9) so zusammenwirkt, daß sie von der genannten Nase (9) beim Schließen des Deckels (3) elastisch zurückgedrückt ist und daß ihre Kerben (8) mit dem gezahnten Bereich (6) des gegenüberliegenden Rings (1) in Eingriff gelangen.

2. Vorrichtung gemäß Anspruch 1, *dadurch gekennzeichnet*, daß die elastische Klaue (7) zusammen mit der Kapsel (4) des Verschlusses (3,4) aus einem Stück hergestellt ist.

## Claims

1. A device for locating and holding a closure on a fixed body so that the said closure projects from a cap member on which a cover plate is mounted, characterised in that the cap member (4) is mounted rotatably on the said body (1) and the latter has a toothed zone, with the said cap member (4) enclosing at least one resilient claw (7) having notches (8) facing towards the toothed zone (6) of the body (1), and the said resilient claw (7) cooperates with a projection (9), which is fixed with respect to the cover plate (3), in such a way that it is resiliently drawn back from the said projection (9) on closing of the cover plate (3), with its notches (8) coming into meshing engagement with the toothed zone (6) of the adjacent overlying body (1).

2. A device according to Claim 1, characterised in that the resilient claw (7) is made integrally with the cap member (4) of the closure (3, 4), in one piece.

## Revendications

1. Dispositif de positionnement et de maintien d'un obturateur (3, 4) sur un embout (2) d'un réservoir, ledit dispositif se composant d'un obturateur (3, 4) et d'une bague (1) liée à l'embout (2), ledit obturateur étant constitué d'un boîtier (4) sur lequel est articulé un couvercle (3), *caractérisé* en ce que le boîtier (4) est monté 10 pivotant sur la bague (1) qui présente une zone crantée (6), ledit boîtier comportant au moins une patte élastique (7) munie de crans (8) en regard de la zone crantée (6) de la bague (1) et ladite patte élastique (7) coopérant avec un doigt (9) solidaire du couvercle (3), en ce que ladite patte est repoussée élastiquement par ledit doigt (9) lors de la fermeture du couvercle (3) et en ce que ses crans (8) viennent en prise avec ladite zone crantée (6) de la bague (1) disposée en regard.

2. Dispositif selon la revendication 1, *caractérisé* en ce que la patte élastique (7) est d'une seule pièce avec le boîtier (4) de l'obturateur (3, 4)

Fig 1

Fig 2